# EUROPEAN PATENT APPLICATION

(11) **EP 4 080 870 A1**
(43) Date of publication of application: **26.10.2022**
(21) Application number: 21213980.2
(22) Date of filing: 13.12.2021
(51) Int. Cl.: H04N 5/232

(54) **CAMERA BASED ON NETWORK COMMUNICATION**

(30) Priority: 20.04.2021 CN 202110484175; 15.06.2021 CN 202110660712
(71) Applicant: Shenzhen Yongnuo Photographic Equipment Co., Ltd., Pingshan District Shenzhen Guangdong 518122 (CN)
(72) Inventor: Zhuang, Jiannan, Shenzhen, 518122 (CN); Zhuang, Yongsheng, Shenzhen, 518122 (CN); Pan, Zuoling, Shenzhen, 518122 (CN)
(74) Representative: Ipey

(57) **Abstract**

A camera based on network communication is provided, including a camera body. A viewfinder module of the camera body is configured for receiving a light signal of a front lens. A sensing component converts the light signal received by the viewfinder module into an image electric signal, and simultaneously transmits the image electric signal to a control chip of the interface conversion circuit. The control chip of the interface circuit performs signal conversion on the received image electrical signal and then transmits the signal to the main control module. The signal after signal processing and image processing by the control circuit of the main control module is transmitted and displayed on a display module of the camera body, while transmitted to an external communication device through a communication module. This device can meet use requirements for wireless networks and the intelligent operating system in multiple environments of the camera.

## Description

### TECHNICLAL FIELD

The disclosure relates to a technical field of photographic devices, in particular to a camera based on network communication.

### BACKGROUND ART

A digital camera is camera that uses electronic sensors to convert optical images into electronic data. According to its structure, the digital camera can be divided into a single-lens reflex camera, a mirrorless camera, a card camera, a sports camera and an industrial camera. Different from ordinary cameras recording images on a film with chemical changes of silver bromide, a sensor of the digital camera is with a photo type charge coupled device or a complementary metal oxide semiconductor.

Cameras of various major brands currently available in the market do not enable 3G/4G/5G wireless mobile network communication function, nor do they support both intelligent operating systems and 3G/4G/5G wireless mobile network communication function at the same time. They can't meet requirements of outdoor instant sharing live broadcast and indoor large-traffic live broadcast, which largely limits users' instant sharing of photos and/or video interaction with a third party. At present, a main functional structure of the camera include: a mount (which can be connected with an interchangeable lens), an image sensor module, a mother board module (with main devices such as a processor, a memory, a earphone/button /USB/ battery/memory card or other interface connectors thereon) and a display screen.

Existing cameras generally adopt a relatively small screen, without an operation interface for a large screen. A few cameras with a wired network card interface can only transmit data through the network card interface and computer connection, and a transmission distance is short and cannot be connected to a local area network.

### SUMMARY

In view of disadvantages of the prior art, an object of the present disclosure is to provide a camera based on network communication, which solves above technical problems in the prior art.

The object of the present disclosure can be achieved by following technical scheme: providing a terminal device for a live broadcast scene with high-definition images, large-data video stream transmission, long-term use and high interactivity.

A camera based on network communication is provided which includes a camera body.

The camera body is internally provided with a communication module, a main control module, a signal conversion circuit, a sensor assembly and a viewfinder module. The viewfinder module is configured for receiving a light signal passing through a lens assembly.

The sensor assembly converts the light signal received by the viewfinder module into an image electric signal and simultaneously transmits the image electric signal to a control chip of the signal conversion circuit.

The control chip of the signal conversion circuit performs a signal conversion on the received image electrical signal and then transmits it to a control circuit of the main control module for signal processing and image processing.

The signal after the signal processing and image processing by the control circuit of the main control module is transmitted and displayed on a display module of the camera body, and is transmitted to an external communication device by calling the communication module through a built-in operating system platform application software of the camera body.

Furthermore, the viewfinder module includes a lens interface arranged at a front end of the camera body and a lens assembly connected to the lens interface. An end where the lens interface is located is provided with a buckle structure through which a detachable connection between the camera body and the lens assembly is realized. In this way, a high-definition image can be obtained by replacing a large-diameter lens assembly (compare with terminals such as a mobile phone and a tablet).

Furthermore, the camera body has a first connecting part and a second connecting part, and the first connecting part is arranged on a top of the camera body and connected with an external lighting auxiliary device; the second connecting part is arranged at a bottom of the camera body and connected with an external supporting component.

Furthermore, the camera body is internally provided with a communication module which includes one or more of a 2G/3G/4G/5G communication module, a WIFI communication module, a bluetooth communication module, a GPS communication module, a USB wired network card communication module and a USB Display Port communication module.

A SIM card holder interface in the 2G/3G/4G/5G communication module performs mobile data transmission with the outside through a 2G/3G/4G/5G network function of the SIM card holder interface.

A USB network card interface in the USB wired network card communication module is connected with an external USB network card, and performs data transmission with the outside in a wired network mode. The USB wired network card interface and a charging interface are separately arranged, so that both using and charging can be made at the same time, thus meeting the scene with long-time use. Specifically, a wireless or wired network mode can be used to ensure transmission of video streams with large data volume.

Furthermore, the signal after the signal processing and image processing by the control circuit of the main control module is transmitted in real time and displayed on the display module of the camera body.

Furthermore, a grip is arranged on a side of a front end face where the camera body is located, and an arc-shaped soft rubber structure is provided on a face of the grip, and an upper end where the grip is located is provided with a groove, and a top where the grip is located is provided with a gripping protrusion.

Furthermore, the display module includes a screen display member, an end where the screen display member is located is connected to a proximate side of the camera body through a rotating shaft member and realizes flipping of the screen display member. A flipping screen design, combined with a momentary sharing function for the Internet and an APP, can make using of the camera highly interactive.

Furthermore, the control chip of the main control module is loaded with an operating system and supports mobile network transmission, and an APP application of the operating system is displayed on the display module and can perform transmission through a network.

Furthermore, a camera head assembly is provided on the proximate side where the camera body is located.

Furthermore, a battery compartment is provided at a bottom of the camera body, and the battery compartment is in a switched configuration, so that a battery in the battery compartment can be replaced.

Furthermore, the front part where the lens interface is located is connected and switched on to the lens assembly by means of a contact connection, while the data interface provided on the lens assembly is configured to power the camera body and/or transmit data.

The method presents following beneficial effects:
1. In this device, various functional modules inside the camera are connected with a main control platform enabling the mobile communication function and the intelligent operating system, using of the camera function and programs such as the APP application can be realized, thus increasing the user's experience; and a replaceable lens component can be used, so as to meet use requirements for wireless or wired networks and the intelligent operating system in multiple environments of the camera.
2. The device has a large reversible screen, and the camera can be operated with touch, thus meeting needs in various scenarios such as live broadcasting, self-timer shooting, recording & broadcasting, or the like. Compared with various buttons of ordinary cameras, this camera has been greatly simplified in design, which makes the operation easier and easier to use.
3. The data interface set on the lens assembly of the device is provided with a power interface function, when the built-in battery of the camera body is in power shortage or the battery is missing, the camera can be powered directly through this interface, so that the camera can operate continuously and keep continuity of programs. In special circumstances, the data interface can be used to directly export data stored in the camera body.

### BRIEF DESCRIPTION OF THE DRAWINGS

In order to illustrate technical schemes of this disclosure more clearly, the following drawings used in the embodiments will be briefly introduced. It should be understood that the following drawings only show some of the embodiments of the present disclosure, and therefore should not be regarded as limiting a scope of protection of the present disclosure. In each drawing, similar components are numbered similarly.
Fig. 1 is a schematic diagram of an overall structure of an embodiment of the present disclosure;
Fig. 2 is a schematic diagram of a proximate side structure of an embodiment of the present disclosure;
Fig. 3 is a schematic diagram of a bottom structure of an embodiment of the present disclosure;
Fig. 4 is a schematic diagram of a front face structure of an embodiment of the present disclosure;
Fig. 5 is a schematic diagram of the lens assembly interface having a power supply interface of an embodiment of the present invention.
Fig. 6 is a schematic diagram of the overall workflow structure of an embodiment of the present disclosure.

Reference Number:
1- Camera Body; 11- First Connecting Part; 12- Second Connecting Part;
13- Lens Interface; 14- Grip; 141- Groove; 142- Gripping Protrusion;
15- Screen Display Component; 150- Rotating Shaft Member; 16- Camera Head Assembly; 17- Battery Compartment;
101 -SIM Card Holder Interface; 102- USB Network Card Interface;
103 -contact interface.

### DETAILED DESCRIPTION

In the following, the technical scheme in the embodiment of the disclosure will be described clearly and completely in connection with the drawings; obviously, the described embodiment is intended to be only a part of the embodiment of the disclosure, but not all of them.

Generally, components of the embodiments of the present disclosure described and illustrated in the drawings herein may be arranged and designed in various different configurations. Therefore, the following detailed description of the embodiments of the disclosure provided in the drawings is not intended to limit the claimed scope of the application, but only shows selected embodiments of the disclosure. On a basis of the embodiments in this disclosure, all other embodiments obtained by the skilled in the art without any creative effort are within the protection scope of this disclosure.

Hereinafter, terms "including", "having" and their cognate words that can be used in various embodiments of the present disclosure are only intended to indicate specific features, numbers, steps, operations, elements, components or combinations of foregoing items, and should not be understood as first excluding existence of one or more other features, numbers, steps, operations, elements, components or combinations of foregoing items or possibility of adding one or more features, numbers, steps, operations, elements, components or combinations of foregoing items.

In addition, terms "first", "second", "third", etc. are only used to distinguish descriptions, and cannot be understood as indicating or implying a relative importance.

Unless otherwise defined, all terms (including technical terms and scientific terms) used herein have the same meanings as those commonly understood by those skilled in the art to which various embodiments of the present disclosure belong. The terms (such as those defined in commonly used dictionaries) will be interpreted as having the same meaning as the contextual meaning in related technical fields and will not be interpreted as an idealized meaning or an overly formal meaning, unless clearly defined in various embodiments of the present disclosure.

### Embodiments

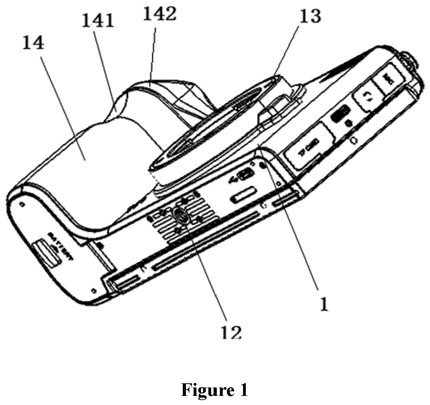

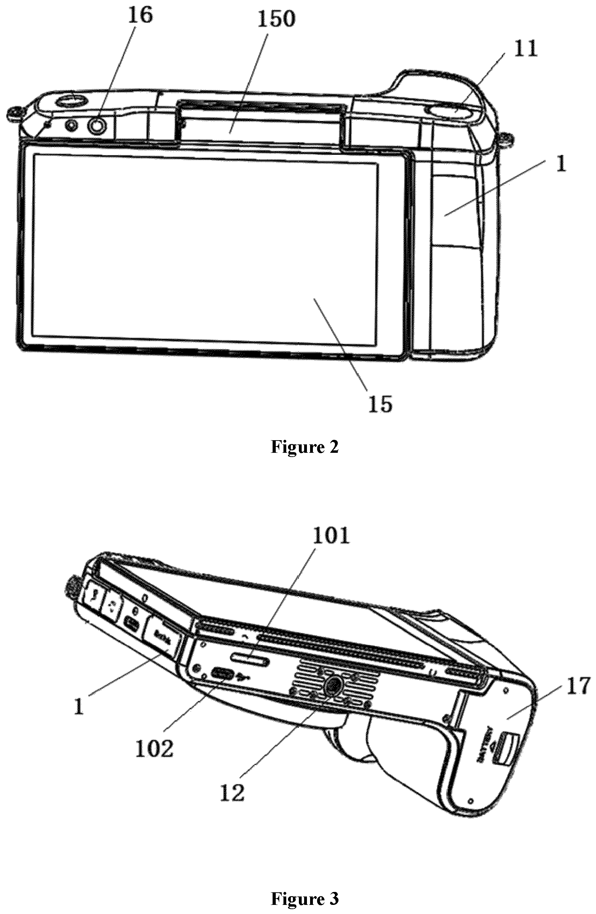

As shown in Figs. 1 and 2, an embodiment of the present disclosure provides a camera based on network communication, which includes a camera body 1.

As shown in Figs. 2 and 3, the camera body 1 has a first connecting part 11 and a second connecting part 12. The first connecting part 11 is placed on a top of the camera body 1 and is connected with a camera auxiliary device such as an external lighting auxiliary device or an external microphone, or the like. The second connecting part 12 is placed at a bottom of the camera body 1, and is connected with an external supporting component, which is convenient for shooting at a fixed position and compatible with an anti-shake module, so as to improve stability of video shooting.

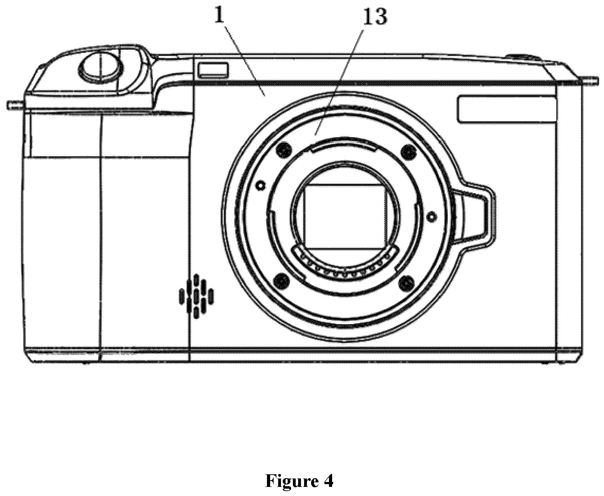

As shown in Fig. 4, a front end where the camera body 1 is located is provided with a lens interface 13, and an end where the lens interface 13 is located is provided with a snap-in structure through which the camera body 1 and the lens assembly can be detachably connected (a overall structure of the lens assembly is not shown in this drawing). Depending on needs of using scenes, a user can install and use the lens assembly with corresponding interfaces to increase the user's experience.

A display module includes a screen display member 15, and an end where the screen display member 15 is located is connected to a proximate side of the camera body 1 through a rotating shaft member 150, so that the screen display member 15 (display screen) can be flipped 180 degrees about the rotating shaft member 150 as a rotating shaft in a vertical plane. Meanwhile, a flexible flat cable for circuit connection of the screen display member 15 (display screen) passes through a hole and is connected to a main control module in the camera body 1 for signal transmission. Through cooperation of a trigger switch and software, images flipping can be realized after the screen display member 15 (display screen) is flipped. A flipping screen design and dual microphone design, combined with a momentary sharing function for the Internet and an APP, can make using of the camera highly interactive.

A camera assembly 16 is arranged on the proximate side where the camera body 1 is located. When in use, display directions of the screen display member 15 (display screen) before and after flipping are opposite, so that the camera assembly 16 can functions as a viewfinder and a observing window when photographing oneself. The camera body 1 has a large reversible screen, and the camera can be operated with touch. Compared with various buttons of ordinary cameras, this camera body 1 has been greatly simplified in design, which makes the operation easier and easier to use.

A grip 14 is arranged on a side of a front end face where the camera body 1 is located, and an arc-shaped soft rubber structure is provided on a face of the grip 14, and an upper end where the grip 14 is located is provided with a groove 141, and a top where the grip 14 is located is provided with a gripping protrusion 142. In order to simulate positional comfort of each finger when operating the camera, a soft rubber groove 141 and a gripping protrusion 142 (which specifically is sleek in shape) are provided on a right side of the screen display member 15 (display screen) in front of the camera body 1. The soft rubber groove 141 makes a thumb feel comfortable in a gripping state, and the gripping protrusion 142 can make the thumb grip tighter. On an interchangeable lens side of the camera body 1, the grip 14 adopts a wider structure, and a groove is designed at a middle finger position, giving consideration to comfort and grasping the camera while the grip 14 adopts a large-area soft rubber design. A battery compartment 17 is provided at a bottom of the camera body 1, and the battery compartment 17 is in a switched configuration so that a battery in the battery compartment 17 can be replaced. And the battery compartment is connected with part of the grip 14, with stable and reliable structural strength.

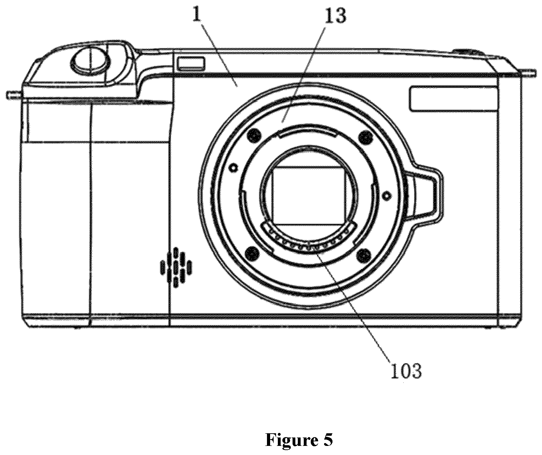

As shown in Fig. 5, the front part where the lens interface 13 is located is connected to the lens assembly by means of a contact connection (i.e., contact interface 103) and through the data interface set on the lens assembly (the specific structure is not drawn in the figure and can be referred to the side position where the lens assembly is located) and through the data interface contacts and connects to the contact interface 103 of the lens interface 13 (so that the circuit data is communicated). When the built-in battery of the camera body 1 is in power shortage or the battery is missing, the data interface on the lens assembly can be used to directly power the camera body 1, so that the camera body 1 continues to work to maintain the continuity of program and avoid interruption of photography caused by replacing the battery. In emergency, the data stored in the camera body 1 can be directly exported through the data interface when the camera body 1 is working at the same time, so as to facilitate editing, cutting, or photography, etc.

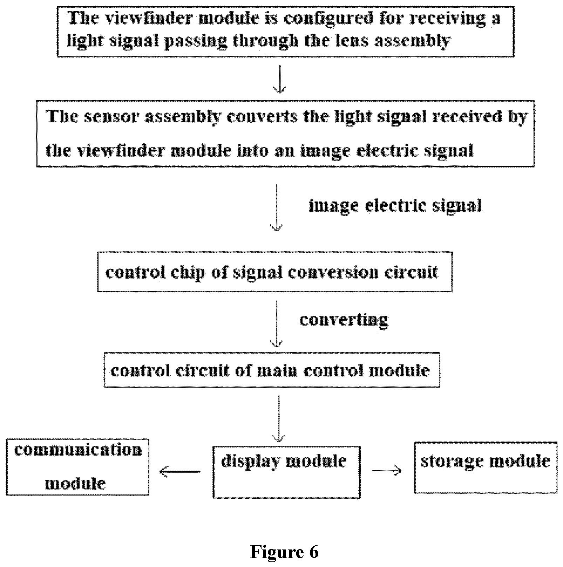

As shown in Fig. 6, the camera body 1 is internally provided with a communication module, a main control module, a signal conversion circuit, a sensor assembly and a viewfinder module. The viewfinder module is configured to receive a light signal from a front end lens interface 13 (through the lens assembly).

The sensor assembly converts the light signal received by the viewfinder module into an image electric signal and simultaneously transmits the image electric signal to a control chip of the signal conversion circuit (because an interface of the sensor module and that of the main control module is different, an external interface conversion circuit is required to serve to bridge; when using the sensor assembly and the main control module with a same interface, this bridge circuit can be directly removed).

The control chip of the interface circuit converts the received image electrical signal and transmits it to a control circuit of the main control module, and performs signal processing and image processing. Because an interface of the image sensor module and that of the processor are of different types and it cannot be directly connected, it is necessary to convert the signal of the image sensor module into a signal consistent with the interface of the processor. However, a processor used in ordinary cameras (without the intelligent operating system of smart cameras and a 3G/4G/5G wireless communication enabling function) is generally is with a same interface as the image sensor, and no additional signal conversion circuit is needed.

The signal after signal processing and image processing by the main control module can be transmitted and displayed on the display module of the camera body 1 to output real-time images on a screen module, or can also be displayed on an external display screen through a USB DP function. Further, a storage module can also be added to store the output images, while the images can be transmitted to an external communication device through the communication module, or can also be displayed on the external display screen through the USB DP function.

Meanwhile, the signal after the signal processing and image processing by the control circuit of the main control module is displayed on application software of the display module through the communication module (the APP application generated by the operating system is displayed on the display module, and the camera body 1 is equipped with an intelligent operating system and can install the APP application). The camera body 1 is internally provided with a communication module which includes one or more of a 2G/3G/4G/5G communication module, a WIFI communication module, a bluetooth communication module, a GPS communication module, a USB wired network card communication module and a USB Display Port communication module; meanwhile, The camera body can realize network application through the communication module and support gesture touch.

A SIM card holder interface 101 in the 2G/3G/4G/5G communication module performs mobile data transmission with the outside through a 2G/3G/4G/5G network function of the SIM card holder interface 101.

A USB network card interface 102 in the USB wired network card communication module is connected with an external USB network card, so as to perform data transmission with the outside in a wired network mode. The USB network card interface 102 and a charging interface are separately arranged, so that both using and charging can be made at the same time, thus meeting the scene with long-time use.

Additional functions of the camera can also be added according to actual use needs. Specifically, the camera body 1 is provided with both an audio input interface and an earphone interface at the same time, which separates audio input from earphone output and increases transmission efficiency and fidelity.

In this device, various functional modules inside the camera are connected with a main control platform enabling the mobile communication function and the intelligent operating system, using of the camera function and the APP application can be realized, thus increasing the user's experience, so as to meet use requirements for wireless networks, wired networks and the intelligent operating system in multiple environments of the camera.

The camera body is provided with the reversible screen display member 15 (display screen), and the camera can be operated with touch. Compared with various buttons of ordinary cameras, this camera has been greatly simplified in design, which makes the operation easier and easier to use.

Meanwhile, according to the user's needs, the camera body 1 can be provided with a lens switching key, and the camera body is provided with an external memory card interface for a storing operation of a memory card.

Furthermore, the camera body 1 is provided with one or more earphone interfaces to meet requirements of earphone listening and/or voice input.

The camera body 1 is also provided with a light sensor to adjust display brightness of the screen display member 15 (display screen) according to ambient light.

A USB interface is provided on the camera body 1 to meet functional requirements such as charging and data exchange, and an antenna is provided in the camera body to meet signal transmission requirement.

The camera based on network communication can be a smart camera, a live camera, a mobile terminal camera, a wireless data terminal, or other cameras, which is not limited to a certain fixed title.

In several embodiments provided in this application, it should be understood that the disclosed device and method can also be implemented in other ways. The above-described device embodiments are only schematic. For example, the flowcharts and structural diagrams in the drawings show architectures, functions and operations of possible implementations of apparatus, methods and computer program products according to various embodiments of the present disclosure. In this regard, each block in the flowchart or block diagram may represent a module, a program segment or a part of code containing one or more executable instructions for implementing specified logical functions. It should also be noted that in some alternative implementations, the functions noted in the blocks may also occur in a different order from that noted in the drawings. For example, two blocks in succession may actually be executed in substantially parallel, or they may sometimes be executed in a reverse order, depending on the functions involved. It should also be noted that each block in the structural diagrams and/or flowcharts, along with combinations of blocks in the structural diagrams and/or flowcharts, can be implemented with dedicated hardware-based systems that perform specified functions or actions, or can be implemented with combinations of dedicated hardware and computer instructi ons.

In addition, each functional module or unit in various embodiments of the present disclosure may be integrated together to form an independent part, or various modules may exist separately, or two or more modules may be integrated to form an independent part.

The functions can be stored in a computer-readable storage medium if they are implemented in a form of a software function module and sold or used as independent products. Based on this understanding, the technical scheme of the present disclosure, or essentially a part of the scheme contributing to a development to the prior art or part of the scheme can be embodied in a form of a software product which is stored in a storage medium and includes several instructions to make a computer device (which can be a smart phone, a personal computer, a server, or a network device, etc.) execute all or part of the steps of the method described in various embodiments of the present disclosure. The aforementioned storage media include: a U disk, a mobile hard disk, a ROM (Read-Only Memory), a RAM (Random Access Memory), a magnetic disk or an optical disk, etc., which can store program codes.

The above are only specific embodiments of the present disclosure, but the protection scope of the present disclosure is not limited to this. Changes or substitutions easily contemplated by any skilled familiar with this art within the technical scope disclosed by the present disclosure should be covered within the protection scope of the present disclosure.

## Claims

1. A camera based on network communication which comprises a camera body, **characterized in that**
the camera body is internally provided with a communication module, a main control module, a signal conversion circuit, a sensor assembly and a viewfinder module; the viewfinder module is configured for receiving a light signal passing through a lens assembly;
the sensor assembly converts the light signal received by the viewfinder module into an image electric signal and simultaneously transmits the image electric signal to a control chip of the signal conversion circuit;
the control chip of the signal conversion circuit performs a signal conversion on the received image electrical signal and then transmits it to a control circuit of the main control module for signal processing and image processing; and
the signal after the signal processing and image processing by the control circuit of the main control module is transmitted and displayed on a display module of the camera body, and is transmitted to an external communication device by calling the communication module through a built-in operating system platform application software of the camera body.

2. The camera based on network communication according to claim 1, **characterized in that** the viewfinder module comprises a lens interface arranged at a front end of the camera body and a lens assembly connected to the lens interface; an end where the lens interface is located is provided with a buckle structure through which a detachable connection between the camera body and the lens assembly is realized.

3. The camera based on network communication according to claim 1, **characterized in that** the camera body has a first connecting part and a second connecting part, and the first connecting part is arranged on a top of the camera body and connected with an external lighting auxiliary device; the second connecting part is arranged at a bottom of the camera body and connected with an external supporting component.

4. The camera based on network communication according to claim 1, **characterized in that** the camera body is internally provided with a communication module which comprises one or more of a 2G/3G/4G/5G communication module, a WIFI communication module, a bluetooth communication module, a GPS communication module, a USB wired network card communication module and a USB Display Port communication module;
wherein a SIM card holder interface in the 2G/3G/4G/5G communication module performs mobile data transmission with the outside through a 2G/3G/4G/5G network function of the SIM card holder interface; and
a USB network card interface in the USB wired network card communication module is connected with an external USB network card, and performs data transmission with the outside in a wired network mode.

5. The camera based on network communication according to claim 1, **characterized in that** the signal after the signal processing and image processing by the control circuit of the main control module is transmitted in real time and displayed on the display module of the camera body.

6. The camera based on network communication according to claim 1, **characterized in that** a grip is arranged on a side of a front end face where the camera body is located, and an arc-shaped soft rubber structure is provided on a face of the grip, and an upper end where the grip is located is provided with a groove, and a top where the grip is located is provided with a gripping protrusion.

7. The camera based on network communication according to claim 1, **characterized in that** the display module comprises a screen display member, an end where the screen display member is located is connected to a proximate side of the camera body through a rotating shaft member and realizes flipping of the screen display member.

8. The camera based on network communication according to claim 1, **characterized in that** the control chip of the main control module is loaded with an operating system and supports mobile network transmission, and an APP application of the operating system is displayed on the display module and can perform transmission through a network.

9. The camera based on network communication according to claim 7, **characterized in that** a camera head assembly is provided on the proximate side where the camera body is located.

10. The camera based on network communication according to claim 1, **characterized in that** a battery compartment is provided at a bottom of the camera body, and the battery compartment is in a switched configuration, so that a battery in the battery compartment is replaced.

11. The camera-based network communication according to claim 1, **characterized in that** the front part where the lens interface is located is connected and switched on to the lens by means of a contact connection, while the data interface provided on the lens assembly is configured to power the camera body and/or transmit data.
